# EUROPEAN PATENT SPECIFICATION

(11) **EP 4 438 463 B1**
(45) Date of publication and mention of the grant of the patent: **08.07.2026**
(21) Application number: 22895333.7
(22) Date of filing: 21.10.2022
(51) Int. Cl.: B63H 20/12, B63H 20/14, B63H 20/20, F16H 61/32

(54) **ENGINE CONTROL DEVICE**
MOTORSTEUERUNGSVORRICHTUNG
DISPOSITIF DE COMMANDE DE MOTEUR

(30) Priority: 22.11.2021 JP 2021189476
(43) Date of publication of application: 02.10.2024
(73) Proprietor: NHK Spring Co., Ltd., Yokohama-shi, Kanagawa 236-0004 (JP)
(72) Inventor: OOSHITA, Sachio, Yokohama-shi, Kanagawa 222-0033 (JP)
(74) Representative: AWA Sweden AB
(86) International application number: PCT/JP2022/039236
(87) International publication number: WO 2023/090047

(56) References cited:
- JP-A- 2007 298 093
- JP-A- 2007 298 093
- JP-A- 2012 101 793
- JP-A- 2019 001 209
- JP-A- H 062 575
- JP-A- H 062 575
- US-A- 5 222 901
- US-A- 5 222 901

## Description

### Technical Field

The present invention relates to an engine control apparatus comprising a lever member for operating an engine and relates to a tiller handle of, for example, an outboard motor.

### Background Art

As described in Patent Literature 1 and Patent Literature 2, an outboard motor comprising a tiller handle has known. The tiller handle is operated by an operator. It is known to provide an operation portion for throttle and a lever member for shift on the tiller handle. It is possible to increase or decrease engine speed by operating the operation portion for throttle. A shift mechanism of the outboard motor is switched to a forward-side shift position by moving the lever member for shift to a forward position. The shift mechanism is switched to a backward-side shift position by moving the lever member to a backward position. The shift mechanism of the outboard is an example of a machine to be controlled.

It is common to use a force transmission member such as a push-pull cable in a tiller handle comprising a lever member for shift operation to transmit force of the lever member to the shift mechanism of an engine. A push cable is moved by operating the lever member to the forward position or the backward position. This switches the shift mechanism of the engine to the forward-side shift position or the backward-side shift position.

### Citation List

### Patent Literatures

Patent Literature 1: JP 2019-1209 A
Patent Literature 2: JP 2012-101793 A
Patent Literature 3: JP H06 2575 A
Patent Literature 4: US 5 222 901 A
Patent Litertaure 5: JP 2007 298093 A

### Summary of Invention

### Technical Problem

In outboard motors in Patent Literatures 1 and 2, a movement of an operation portion is transmitted to an engine by a mechanical force transmission member. In that case, a movement of the operation portion is restricted in a case where a frictional resistance is large when the force transmission member moves. Therefore, the operation portion cannot be easily operated in some cases.

It is conceived to electrically detect the movement of the operation portion of the lever member and the like. The force transmission member moves by an actuator of motors and the like driving based on a detected electric output. For example, a torque sensor is provided on a tiller handle. The force transmission member can be moved by actuating the actuator of motors and the like based on the output from the torque sensor.

The electric detection of the operation portion by using the torque sensor involves complicated control system and increases cost. In addition, the electric detection has concerns that the shift operation cannot be achieved when the actuator is inoperative due to electrical system malfunction and the like.

An object of an embodiment is to provide an engine control apparatus capable of assisting the shift operation using motor output. The embodiment provides the engine control apparatus capable of controlling start and stop of the motor irrespective of electric signals of the torque sensors and the like and performing the shift operation irrespective of the electrical system malfunction.

### Solution to Problem

An engine control apparatus of an embodiment comprises a base member, a lever member for shift operation, an output gear, a motor, a potentiometer, a shift arm, a reduction gear mechanism, and a force transmission mechanism. The lever member rotates about an input shaft provided on the base member. The lever member moves from a neutral position in a first direction and a second direction. The output gear is provided on the input shaft. The output gear is capable of relatively rotating about the input shaft. The motor rotates in a first rotational direction and a second rotational direction.

When the lever member moves by a predetermined angle in the first direction, the potentiometer outputs a signal causing the motor to rotate in the first rotational direction. When the lever member moves by a predetermined angle in the second direction, the potentiometer outputs a signal causing the motor to rotate in the second rotational direction. The shift arm turns around a shift arm shaft provided on the base member. A shift arm driving gear provided on the shift arm shaft engages with the output gear. The reduction gear mechanism transmits rotation of the motor to the shift arm driving gear.

The force transmission mechanism includes a dumber unit. The damper unit is provided between the input shaft and the output gear. An operator operates the lever member. When the lever member moves by a predetermined angle or less from the neutral position, the damper unit deforms. Thus, rotation of the input shaft is allowed in a state where the output gear stops. When the lever member moves by more than the predetermined angle, the rotation of the input shaft is transmitted to the output gear via the damper unit. The output gear rotates and causes the shift arm driving gear to rotate. Thus, the shift arm moves to a forward-side shift position or a backward-side shift position.

An example of the damper unit may include a driving side rotor, a pin, and an elastic member. The driving side rotor rotates together with the input shaft. The pin is provided on the output gear or the driving side rotor. The elastic member is pressed by the pin to deform in a state where the input shaft rotates in the first direction. In addition, the elastic member is pressed by the pin to deform in a state where the input shaft rotates in the second direction.

The damper unit preferably includes a first stopper and a second stopper. The first stopper prevents the driving side rotor from relatively rotating at a first angle or more with respect to the output gear in a state where the driving side rotor rotates in the first direction and the elastic member deforms. The second stopper prevents the driving side rotor from relatively rotating at a second angle or more with respect to the output gear in a state where the driving side rotor rotates in the second direction and the elastic member deforms.

The elastic member may include a first elastic body and a second elastic body. The first elastic body is arranged to be opposed to a side surface of the pin. The first elastic body is compressed by the pin in a state where the input shaft rotates in the first direction. The second elastic body is arranged to be opposed to other side surface of the pin. The second elastic body is compressed by the pin in a state where the input shaft rotates in the second direction.

An example of the reduction gear mechanism includes a plurality of spur gears. With the motor being in a non-energized state, torque input from the lever member to the input shaft is transmitted to the output gear via the force transmission mechanism. The torque may cause the shift arm driving gear and the shift arm to rotate. The motor may be driven to rotate by the torque input to the input shaft being transmitted to the motor via the reduction gear mechanism.

### Advantageous Effects of Invention

An engine control apparatus of an embodiment can assist shift operation using torque of motor. In addition, start and stop of the motor can be controlled without a torque sensor and the shift operation can be performed even an electrical system malfunction occurs.

### Brief Description of Drawings

FIG. 1 is a side view showing a part of a small boat comprising an outboard motor.
FIG. 2 is a perspective view showing an engine control apparatus, a cover of which is detached, of a first embodiment.
FIG. 3 is a perspective view showing the engine control apparatus shown in FIG. 2 from a side opposite to FIG. 2.
FIG. 4 is a cross-sectional perspective view showing a part of the engine control apparatus.
FIG. 5 is a side view showing a state where a lever member of the engine control apparatus moves from a neutral position to a first direction.
FIG. 6 is a side view showing a state where the lever member of the engine control apparatus moves from the neutral position to a second direction.
FIG. 7 is a perspective view showing a force transmission mechanism of the engine control apparatus.
FIG. 8 is a schematic exploded perspective view showing the force transmission mechanism shown in FIG. 7.
FIG. 9 is a front view of the force transmission mechanism shown in FIG. 7.
FIG. 10 is a front view showing a state where a driving side rotor of the force transmission mechanism shown in FIG. 9 rotates in the first direction.
FIG. 11 is a front view showing a state where the driving side rotor of the force transmission mechanism shown in FIG. 9 rotates in the second direction.
FIG. 12 is a front view showing a force transmission mechanism comprising a damper unit of a second embodiment.
FIG. 13 is a front view showing a force transmission mechanism comprising a damper unit of a third embodiment.
FIG. 14 is a front view showing a state where a driving side rotor of the force transmission mechanism shown in FIG. 13 rotates in a first direction.
FIG. 15 is a front view showing a force transmission mechanism comprising a damper unit of a fourth embodiment.
FIG. 16 is a front view showing a state where a driving side rotor of the force transmission mechanism shown in FIG. 15 rotates in a first direction.
FIG. 17 is a front view showing a force transmission mechanism comprising a damper unit of a fifth embodiment.
FIG. 18 is a front view showing a state where a driving side rotor of the force transmission mechanism shown in FIG. 17 rotates in a first direction.

### Mode for Carrying Out the Invention

### [First Embodiment]

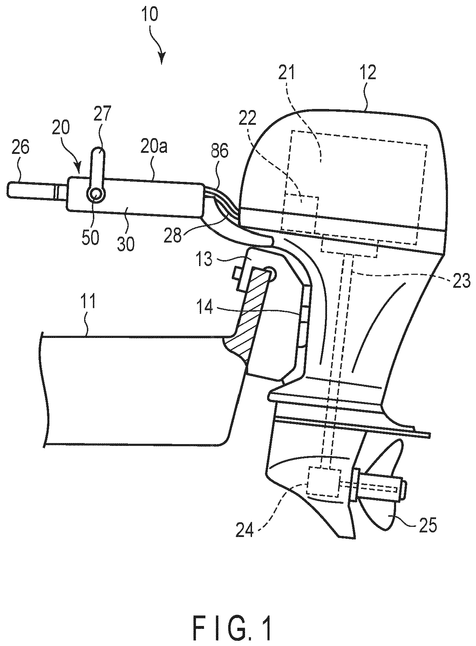

An engine control apparatus of a first embodiment will be described with reference to FIG. 1 to FIG. 11.

A small boat 10 partially shown in FIG. 1 comprises an outboard motor 12 mounted in the rear of a hull 11. The outboard motor 12 is fixed to the hull 11 by a fixing mechanism 13. The outboard motor 12 can change its direction to right or left from a hinge portion 14 serving as a center. A tiller handle 20 for steering is provided on the outboard motor 12. The direction of the outboard motor 12 can be changed by operating the tiller handle 20.

An engine 21, a throttle mechanism 22, a moving force transmission mechanism 23, and a shift mechanism 24 are provided in the outboard motor 12. The rotation of the engine 21 is transmitted to a propeller 25 via the moving force transmission mechanism 23 and the shift mechanism 24. The shift mechanism 24 has a function of switching the rotational direction of the propeller 25. The shift mechanism 24 is an example of a machine to be controlled. A throttle operation member 26 for operating the throttle mechanism 22 and a lever member (shift lever) 27 for operating the shift mechanism 24 are provided on the tiller handle 20. The throttle operation member 26 is connected to the throttle mechanism 22 through a throttle cable 28.

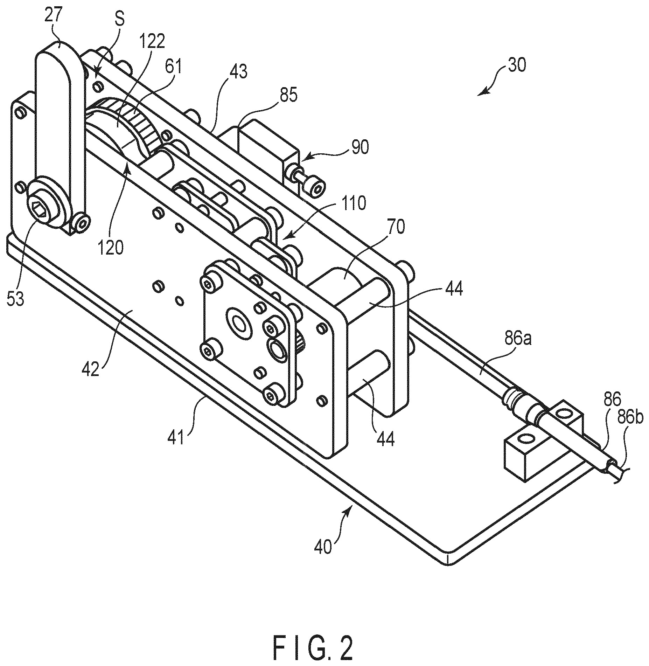

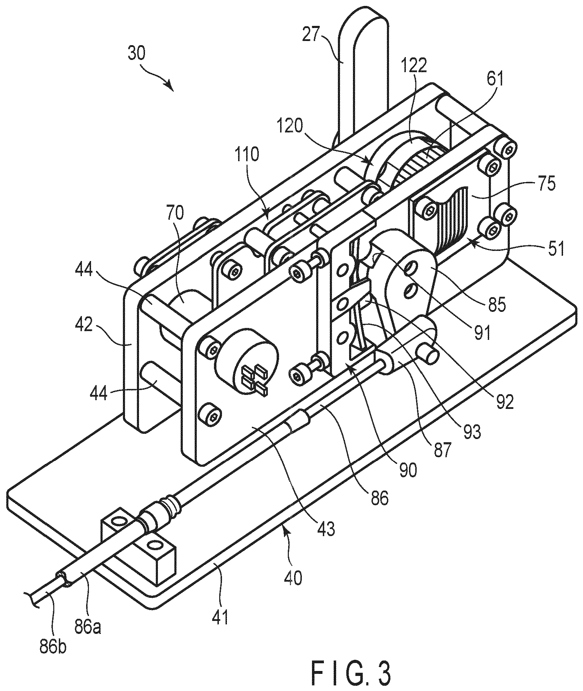

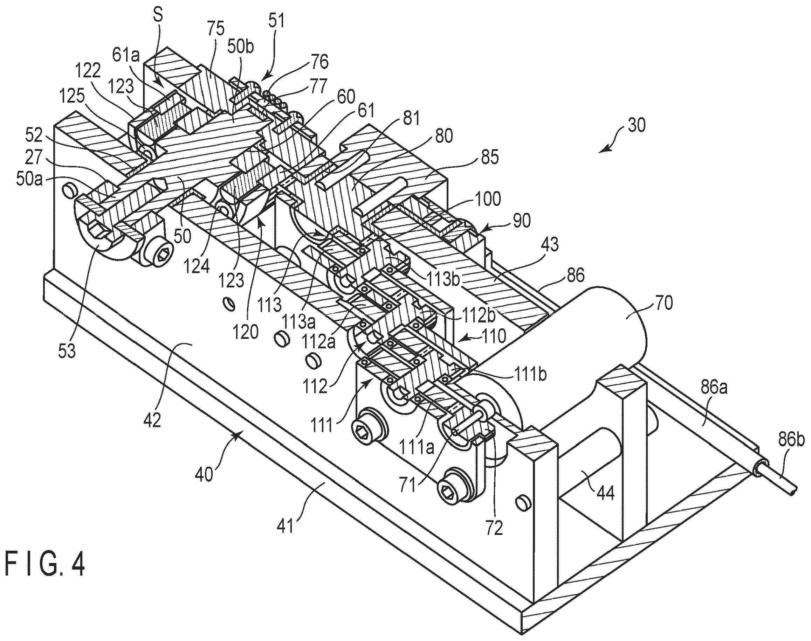

The tiller handle 20 of the present embodiment comprises an engine control apparatus 30. FIG. 2 is a schematic perspective view showing the engine control apparatus 30 in a state where a cover 20a (shown in FIG. 1) of the tiller handle 20 is detached. FIG. 3 is a perspective view showing the engine control apparatus 30 from a side opposite to FIG. 2. FIG. 4 is a perspective view showing a part of the engine control apparatus 30 in cross-section along a horizontal direction.

The engine control apparatus 30 comprises a base member 40. The shape of the base member 40 is not specifically limited, and includes a base body 41 and a pair of frame members 42 and 43 provided on the base body 41, for example. The frame members 42 and 43 are opposed to each other with gaps and are fixed to each other by a fastening member 44 such as a bolt.

As shown in FIG. 4, an input shaft 50 and a potentiometer 51 are provided on the base member 40. The potentiometer 51 will be described later. The input shaft 50 is rotatably supported by a bearing member 52 provided on the frame member 42. A first end portion 50a of the input shaft 50 is located outside the frame member 42. The lever member 27 for shift operation is attached to the first end portion 50a of the input shaft 50 by a fixing member 53. The lever member 27 can rotate about the input shaft 50.

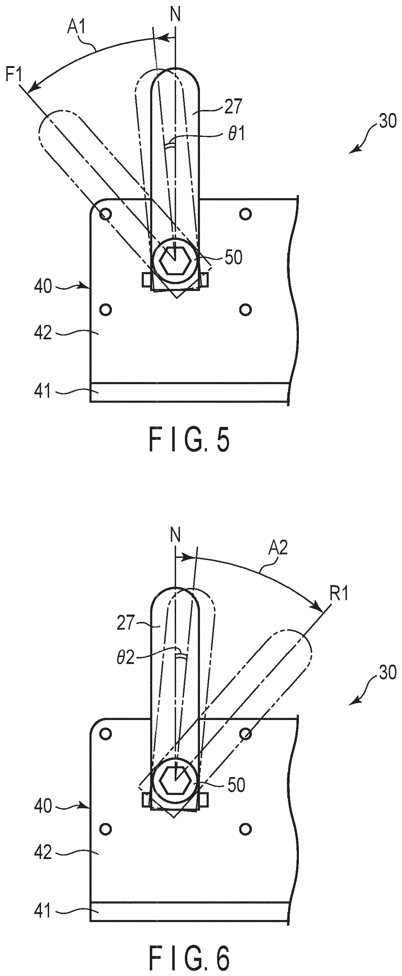

FIG. 5 is a side view showing a state where the lever member 27 moves from a neutral position N to a first direction A1 (forward side). FIG. 6 is a side view showing a state where the lever member 27 moves from the neutral position N to a second direction A2 (backward side). The lever member 27 can move from the neutral position N in the first direction A1 and the second direction A2 by a hand of an operator.

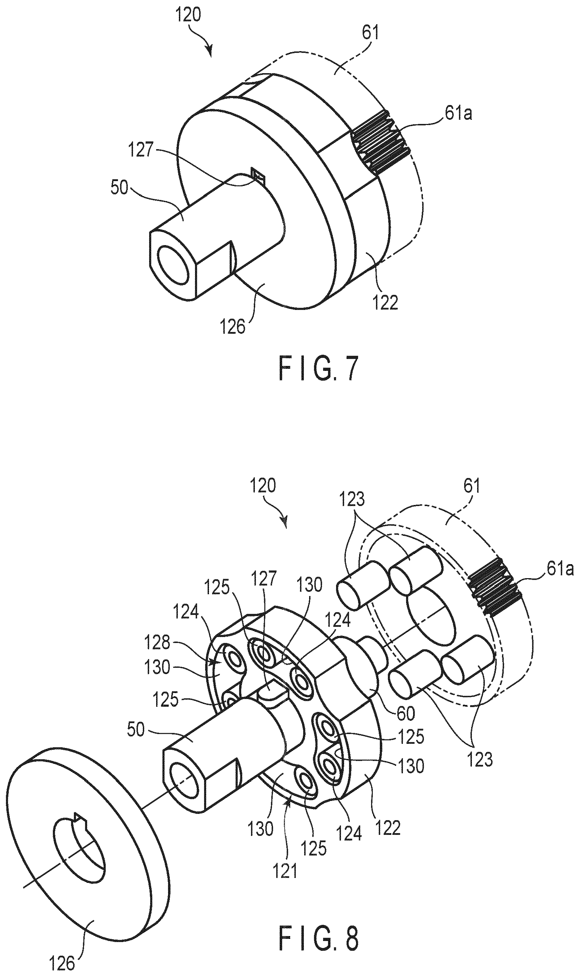

A column shaped gear holding portion 60 (shown in FIG. 4) is provided on a part of the input shaft 50 in the length direction. The gear holding portion 60 is arranged in a space S inside the frame members 42 and 43. An output gear 61 (shown in FIG. 4, FIG. 7, and FIG. 8) is provided on the gear holding portion 60. The output gear 61 can relatively rotate about the input shaft 50 with respect to the input shaft 50. A gear portion 61a is formed to be continuous all around the output gear 61. For the sake of making figures simple, FIG. 7 and FIG. 8 show a part of the gear portion 61a.

A motor 70 is arranged on the base member 40. A gear 72 is provided on an output shaft 71 of the motor 70 (shown in FIG. 4). The motor 70 can rotate by direct current in the first rotational direction and the second rotational direction opposite to the first rotational direction. In other words, the motor 70 can perform forward/backward rotation. A driving source of the motor 70 is a battery mounted on the hull 11.

The potentiometer 51 is provided on the base member 40. The potentiometer 51 includes s support member 75, a potentiometer substrate 76, and the like. The support member 75 is fixed to the frame member 43. The potentiometer substrate 76 is fixed to the support member 75. A magnet 77 is provided on a second end portion 50b of the input shaft 50. An element provided on the potentiometer substrate 76 reacts to magnetism of the magnet 77. Thus, the position of the rotational direction of the input shaft 50 (angle with respect to a reference position) can be detected.

The lever member 27 rotates in the first direction A1 (shown in FIG. 5) and the second direction A2 (shown in FIG. 6). When the lever member 27 moves by a first angle θ1 in the first direction A1, the potentiometer 51 outputs a first signal causing the motor 70 to rotate in the first rotational direction. When the lever member 27 moves to a forward-side position F1, a signal to stop the motor 70 is output.

When the lever member 27 moves by a second angle θ2 in the second direction A2, the potentiometer 51 outputs a second signal causing the motor 70 to rotate in the second rotational direction. When the lever member 27 moves to a backward-side position R1, a signal to stop the motor 70 is output.

A shift arm shaft 80 (shown in FIG. 4) is provided on the base member 40. The shift arm shaft 80 is rotatably supported by a bearing member 81 provided on the frame member 43. A shift arm 85 (shown in FIG. 3 and FIG. 4) is provided on the shift arm shaft 80. The shift arm 85 rotates forward/backward direction from the shift arm shaft 80 serving as the center of the rotation. The shift arm 85 moves to the forward-side shift position and the backward-side shift position from the neutral position.

As shown in FIG. 3, an end of a shift cable 86 is connected to the shift arm 85 through a connecting member 87. The other end of the shift cable 86 is connected to the shift mechanism 24 of the outboard motor 12 (shown in FIG. 1). As an example, the shift cable 86 is a push-pull cable including an outer tube 86a, an inner cable 86b, and the like. The shift mechanism 24 is operated when the shift cable 86 is pushed or pulled by the shift arm 85.

The engine control apparatus 30 of the present embodiment includes a detent mechanism 90 (partially shown in FIG. 3 and FIG. 4). The detent mechanism 90 can hold the shift arm 85 at the neutral position, the forward-side shift position, and the backward-side shift position. As an example, the detent mechanism 90 includes a plurality of recesses 91 (partially shown in FIG. 3), a brake member 92 such as a ball, and a spring 93. For example, three recesses 91 are formed in a circumferential direction of a base of the shift arm 85. The brake member 92 can engage with any of three recesses 91. The spring 93 urges the brake member 92. The three recesses 91 are formed on positions for making the shift arm 85 stop at any of the neutral position, the forward-side shift position, and the backward-side shift position.

As shown in FIG. 4, a shift arm driving gear 100 is provided on the shift arm shaft 80. The shift arm driving gear 100 engages with the output gear 61. The output gear 61 rotates and causes the shift arm driving gear 100 to rotate according the rotational direction of the output gear 61. Thus, the shift arm 85 moves to the forward-side shift position or the backward-side shift position.

The gear 72 is provided on the output shaft 71 of the motor 70. A reduction gear mechanism 110 is arranged between the gear 72 and the shift arm driving gear 100. The rotation of the motor 70 is transmitted to the shift arm driving gear 100 via the reduction gear mechanism 110. As an example, the reduction gear mechanism 110 includes a first gear unit 111, a second gear unit 112, and a third gear unit 113. The configuration of the reduction gear mechanism 110 is not limited to that of the present embodiment. In other words, the reduction gear mechanism 110 comprises any configurations in which the rotation speed of the motor 70 is reduced and torque is increased and transmitted to the shift arm driving gear 100.

The first gear unit 111 includes a large diameter gear 111a and a small diameter gear 111b. The large diameter gear 111a engages with the gear 72 of the motor 70. The second gear unit 112 includes a large diameter gear 112a and a smaller diameter gear 112b. The large diameter gear 112a engages with the small diameter gear 111b of the first gear unit 111. The third gear unit 113 includes a large diameter gear 113a and a small diameter gear 113b. The large diameter gear 113a engages with the small diameter gear 112b of the second gear unit 112. The small diameter gear 113b of the third gear unit 113 engages with the shift arm driving gear 100. Therefore, the rotation speed of the motor 70 is reduced by the reduction gear mechanism 110, and the rotation of the motor 70 is transmitted to the shift arm driving gear 100.

The reduction gear mechanism 110 includes a plurality of gears 111a, 111b, 112a, 113a, and 113b. These gears 111a, 111b, 112a, 112b, 113a, and 113b all are spur gears. The gear 72 of the motor 70 and the shift arm driving gear 100 are spur gears as well. Therefore, if the motor 70 becomes non-energized state due to power supply trouble and the like, torque input to the lever member 27 can be transmitted to the shift arm driving gear 100. In addition, torque input to the lever member 27 can be transmitted to the motor 70 via the reduction gear mechanism 110 as well. Therefore, even if electrical outage occurs, the motor 70 can be forcibly driven to rotate by manual torque input to the lever member 27. The shift arm 85 can be moved to the forward-side shift position or the backward-side shift position.

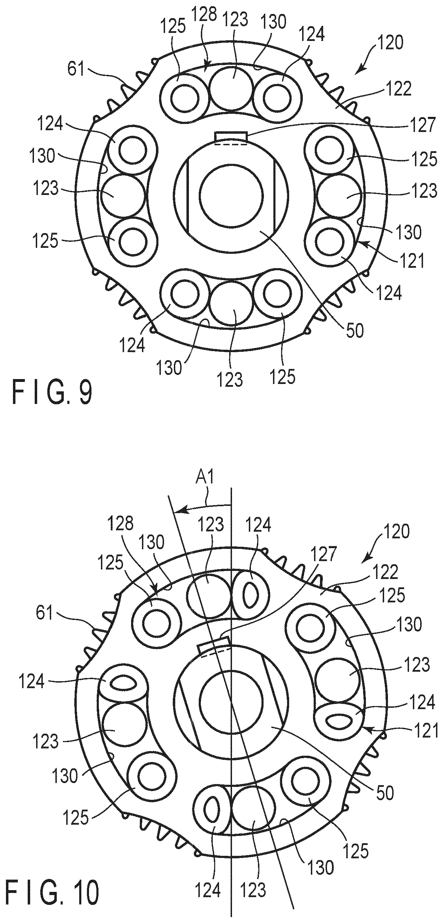

As shown in FIG. 7 and FIG. 8, a force transmission mechanism 120 is provided on the input shaft 50. The force transmission mechanism 120 includes a damper unit 121. FIG. 7 is a perspective view of the force transmission mechanism 120. FIG. 8 is an exploded perspective view of the force transmission mechanism 120. FIG. 9 is a front view of the damper unit 121.

As an example, the damper unit 121 includes a driving side rotor 122, a plurality (for example, four) of pins 123, a first elastic body 124, a second elastic body 125, and a lid member 126. The driving side rotor 122 rotates together with the input shaft 50. The pin 123 is provided on the output gear 61. The driving side rotor 122 and the lid member 126 are coupled with each other by a rotation prevention member 127. The driving side rotor 122 and the lid member 126 rotate together with the input shaft 50. An elastic member 128 is constituted by the first elastic body 124 and the second elastic body 125.

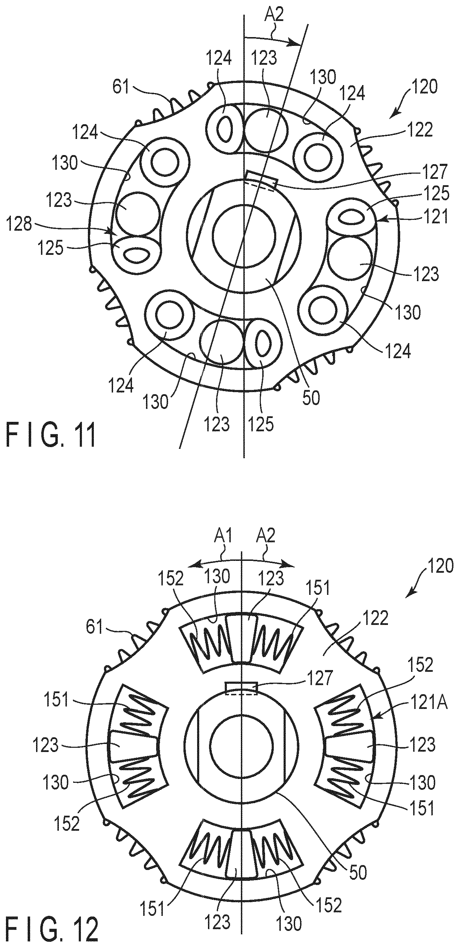

FIG. 9 is a front view of the force transmission mechanism 120 including the damper unit 121. FIG. 10 is a front view showing a state where the driving side rotor 122 rotates in the first direction. FIG. 11 is a front view showing a state where the driving side rotor 122 rotates in the second direction.

The first elastic body 124 and the second elastic body 125 are formed of, for example, an elastomer or a rubber elastic body such as synthetic rubber. As shown in FIG. 8 to FIG. 11, the elastic bodies 124 and 125 are hollows, as an example. Depending on the need, the elastic bodies 124 and 125 may be solid. These elastic bodies 124 and 125 may be formed of elastic material. The elastic material deforms in a direction toward which the elastic material is compressed when a compressive load is applied and can also store energy to restore its shape.

Dumper accommodation holes 130, which are of the same number as the pins 123, are formed in the driving side rotor 122. As shown in FIG. 9, the elastic member 128 is accommodated in each of the dumper accommodation holes 130. The elastic member 128 is constituted by the first elastic body 124 and the second elastic body 125. The first elastic body 124 and the second elastic body 125 are arranged to sandwich the pin 123. The first elastic body 124 is arranged in the dumper accommodation hole 130 to be opposed to one side surface of the pin 123. The second elastic body 125 is arranged in the dumper accommodation hole 130 to be opposed to the other side surface of the pin 123. As another embodiment, the pin 123 may be provided on the driving side rotor 122 and the elastic member 128 may be provided on the output gear 61.

As shown in FIG. 5, an operator moves the lever member 27 from the neutral position N to the first direction A1 by a hand. Thus, torque of the first direction A1 is applied from the lever member 27 to the input shaft 50. As shown in FIG. 10, the first elastic body 124 is compressed by the pin 123 using torque applied in the first direction A1. That is, the first elastic body 124 deforms (decreasing its thickness) in a state where the input shaft 50 rotates in the first direction A1.

When the lever member 27 moves in the first direction A1 within the predetermined angle θ1 (shown in FIG. 5) in this manner, the first elastic body 124 is compressed by the pin 123. Thus, the input shaft 50 is allowed to rotate in a state where the output gear 61 stops. In other words, the input shaft 50 alone rotates in the first direction A1 without the output gear 61 moving.

When the lever member 27 moves by the first angle θ1 in the first direction A1, the potentiometer 51 outputs a signal (first signal) causing the motor 70 to rotate in the first rotational direction. This first signal causes the motor 70 to rotate in the first rotational direction. When the motor 70 rotates in the first rotational direction, the rotation is transmitted to the shift arm driving gear 100 via the reduction gear mechanism 110. Thus, the shift arm 85 moves to the forward-side shift position. In other words, the shift arm 85 is moved to the forward-side shift position by torque caused by the motor 70. An operator only has to put a hand on the shift arm 85. In some cases, an operator does not have to put a hand on the shift arm 85.

As shown in FIG. 5, when the lever member 27 moves to the forward-side position F1, the motor 70 stops based on the signal output from the potentiometer 51. The motor 70 stops to make the lever member 27 stop at the forward-side position F1. The shift arm 85 is held at the forward-side shift position by the detent mechanism 90.

As shown in FIG. 6, an operator moves the lever member 27 from the neutral position N to the second direction A2 by a hand. Thus, torque of the second direction A2 is applied from the lever member 27 to the input shaft 50. As shown in FIG. 11, the second elastic body 125 is compressed by the pin 123 using torque applied in the second direction A2. That is, the second elastic body 125 deforms (decreasing its thickness) in a state where the input shaft 50 rotates in the second direction A2.

When the lever member 27 moves in the second direction A2 within the predetermined second angle θ2 (shown in FIG. 6) in this manner, the second elastic body 125 deforms to allow the rotation of the input shaft 50 in a state where the output gear 61 stops. In other words, the input shaft 50 alone rotates in the second direction A2 without the output gear 61 moving.

When the lever member 27 moves by the second angle θ2 in the second direction A2, the potentiometer 51 outputs a signal (second signal) causing the motor 70 to rotate in the second rotational direction. This second signal causes the motor 70 to rotate in the second rotational direction. When the motor 70 rotates in the second rotational direction, the rotation is transmitted to the shift arm driving gear 100 via the reduction gear mechanism 110. Thus, the shift arm 85 moves to the backward-side shift position. In other words, the shift arm 85 is moved to the backward-side shift position by torque caused by the motor 70. An operator only has to put a hand on the shift arm 85. In some cases, an operator does not have to put a hand on the shift arm 85.

As shown in FIG. 6, when the lever member 27 moves to the backward-side position R1, the motor 70 stops based on the signal output by the potentiometer 51. The motor 70 stops to cause the lever member 27 to stop at the backward-side position R1. At this time, the shift arm 85 is held at the backward-side shift position by the detent mechanism 90.

During a neutral state, such as a case of idling a vehicle engine, in which shift operation is not conducted, the lever member 27 is urged to the neutral position N by elastic restoring force of the damper unit 121. In addition, the shift arm 85 is held at the neutral position by the detent mechanism 90. Therefore, the lever member 27 or the shift arm 85 can be prevented from unpredictably moving to the forward side or the backward side.

As described above, when an operator operates the lever member 27, the elastic bodies 124 and 125 of the damper unit 121 deform due to torque input to the lever member 27. The deformation of the elastic bodies 124 and 125 cause moderate reaction force on the lever member 27. When the lever member 27 moves to the predetermined angleθ1 in the forward side or the predetermined angle θ2 in the backward side against this reaction force, the motor 70 is actuated based on the output from the potentiometer 51. Therefore, start and stop of the motor 70 can be controlled based on the position of the lever member 27 without using the torque sensor.

In the engine control apparatus 30 of the present embodiment, an assist force based on torque of the motor 70 is added to operation force of the shift arm 85, when the shift arm 85 is operated. That is, the shift arm 85 can be switched to the forward-side shift position or the backward-side shift position by assist force of the motor 70. Thus, the shift operation can be easily performed by small force.

The motor 70 may become non-energized state due to unpredicted power supply trouble and the like. When the motor 70 becomes non-energized state, an operator manually moves the lever member 27 in the first direction A1 or the second direction A2. Thus, torque input to the lever member 27 is transmitted to the shift arm driving gear 100 via the output gear 61. For example, an operator moves the lever member 27 by more than the angle θ1 toward the forward-side position F1. In that case, the rotation of the input shaft 50 is transmitted to the output gear 61 through the first elastic body 124. For example, an operator moves the lever member 27 by more than the angle θ2 toward the backward-side position R1. In that case, the rotation of the input shaft 50 is transmitted to the output gear 61 through the second elastic body 125.

Therefore, even if the electrical outage occurs, the shift arm 85 can be forcibly driven by a hand. At this time, torque input to the lever member 27 is transmitted to the motor 70 via the reduction gear mechanism 110 and thus the motor 70 is driven to rotate.

### [Second Embodiment]

FIG. 12 is a front view showing a force transmission mechanism 120 comprising a damper unit 121A of a second embodiment. The damper unit 121A comprises metal springs 151 and 152. The springs 151 and 152 are, for example, coil springs, disc springs, and the like. The spring 151 is opposed to a side surface of a pin 123. The spring 152 is opposed to the other side surface of the pin 123. An elastic member is constituted by the pair of springs 151 and 152.

When an input shaft 50 rotates in a first direction A1, the spring 151 is compressed by the pin 123. When the input shaft 50 rotates in a second direction A2, the spring 152 is compressed by the pin 123. The constituent elements other than the above are common to the damper unit 121 of the first embodiment (FIG. 9 to FIG. 11) and the damper unit 121A of the second embodiment. Common reference numbers are added to constituent elements which are common to those of the damper unit 121 of the first embodiment and the damper unit 121A of the second embodiment and explanations of those parts are omitted.

### [Third Embodiment]

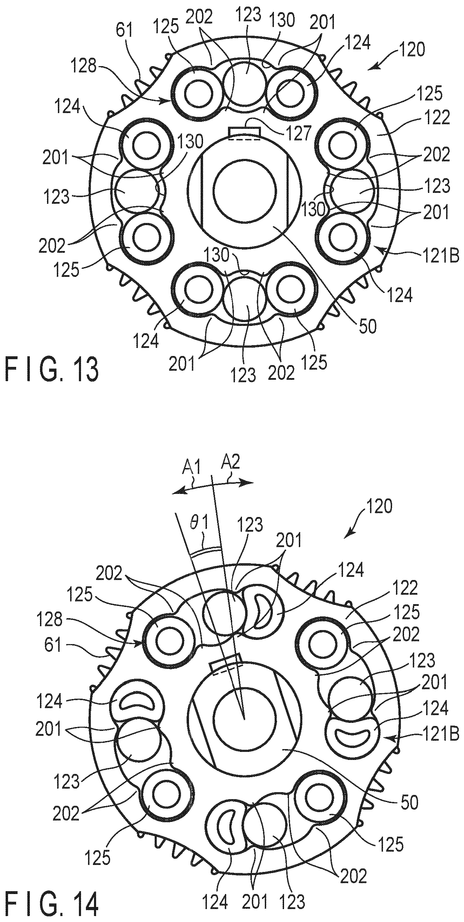

FIG. 13 is a front view showing a force transmission mechanism 120 comprising a damper unit 121B of a third embodiment. FIG. 14 shows a state where a driving side rotor 122 of the damper unit 121B rotates in a first direction A1. This damper unit 121B includes a first stopper 201 and a second stopper 202. The first stopper 201 is formed between a pin 123 and a first elastic body 124. The second stopper 202 is formed between the pin 123 and a second elastic body 125. The constituent elements other than the above are common to the damper unit 121 of the first embodiment (FIG. 9 to FIG. 11) and the damper unit 121B of the third embodiment. Common reference numbers are added to constituent elements which are common to those of the damper unit 121 of the first embodiment and the damper unit 121B of the third embodiment and explanations of those parts will be omitted.

As shown in FIG. 14, the first elastic body 124 is compressed by the pin 123, when the driving side rotor 122 rotates in a first direction A1. At the same time, the pin 123 contacts the first stopper 201. Thus, the driving side rotor 122 is prevented from relatively rotating at a first angle θ1 or more with respect to the output gear 61 in the first direction A1. Thus, excessive compression of the first elastic body 124 can be suppressed. Therefore, the first elastic body 124 can be prevented from being broken, and the durability of the first elastic body 124 can be increased.

Contrary to the case shown in FIG. 14, when the driving side rotor 122 rotates in a second direction A2, the second elastic body 125 is pressed by the pin 123 to deform. At the same time, the pin 123 contacts the second stopper 202. Thus, the driving side rotor 122 is prevented from relatively rotating at a second angle or more with respect to the output gear 61 in the second direction A2. Thus, excessive compression of the second elastic body 125 can be suppressed. Therefore, the second elastic body 125 can be prevented from being broken, and the durability of the second elastic body 125 can be increased.

### [Fourth Embodiment]

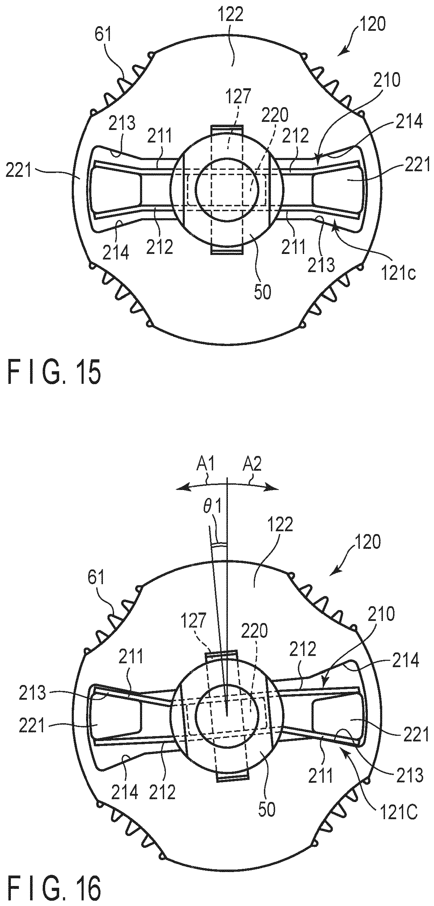

FIG. 15 is a front view showing a force transmission mechanism 120 comprising a damper unit 121C of a fourth embodiment. FIG. 16 shows a state where a driving side rotor 122 of the damper unit 121C rotates in a first direction A1. This damper unit 121C includes a first plate spring 211, a second plate spring 212, a first stopper 213, and a second stopper 214. An elastic member 210 is constituted by the first plate spring 211 and the second plate spring 212. The first stopper 213 is opposed to the first plate spring 211. The second stopper 214 is opposed to the second plate spring 212.

The first plate spring 211 and the second plate spring 212 is fixed to the input shaft 50 by a fixing member 220 and a rotation prevention member 127. The driving side rotor 122 rotates together with the input shaft 50. Thus, the plate springs 211 and 212, the fixing member 220, and the rotation prevention member 127 rotate together with the driving side rotor 122. A pair of pins 221 are provided on an output gear 61. The pin 221 rotates together with the output gear 61. The constituent elements other than the above are common to the damper unit 121 of the first embodiment (FIG. 9 to FIG. 11) and the damper unit 121C of the fourth embodiment. Common reference numbers are added to constituent elements which are common to those of the damper unit 121 of the first embodiment and the damper unit 121C of the fourth embodiment and explanations of those parts will be omitted.

As shown in FIG. 16, the first plate spring 211 is pressed and bent by the pin 221, when the driving side rotor 122 rotates in the first direction A1. At the same time, the pin 221 contacts the first stopper 213. Thus, the driving side rotor 122 is prevented from relatively rotating at a first angle θ1 or more with respect to the output gear 61 in the first direction A1. Thus, excessive deformation of the first plate spring 211 can be suppressed. Therefore, the first plate spring 211 can be prevented from being broken, and the durability of the first plate spring 211 can be increased.

Contrary to the case shown in FIG. 16, when the driving side rotor 122 rotates in the second direction A2, the second plate spring 212 is pressed by the pin 221 to deform. At the same time, the pin 221 contacts the second stopper 214. Thus, the driving side rotor 122 is prevented from relatively rotating at a second angle or more with respect to the output gear 61 in the second direction A2. Thus, excessive deformation of the second plate spring 212 can be suppressed. Therefore, the second plate spring 212 can be prevented from being broken, and the durability of the second plate spring 212 can be increased.

### [Fifth Embodiment]

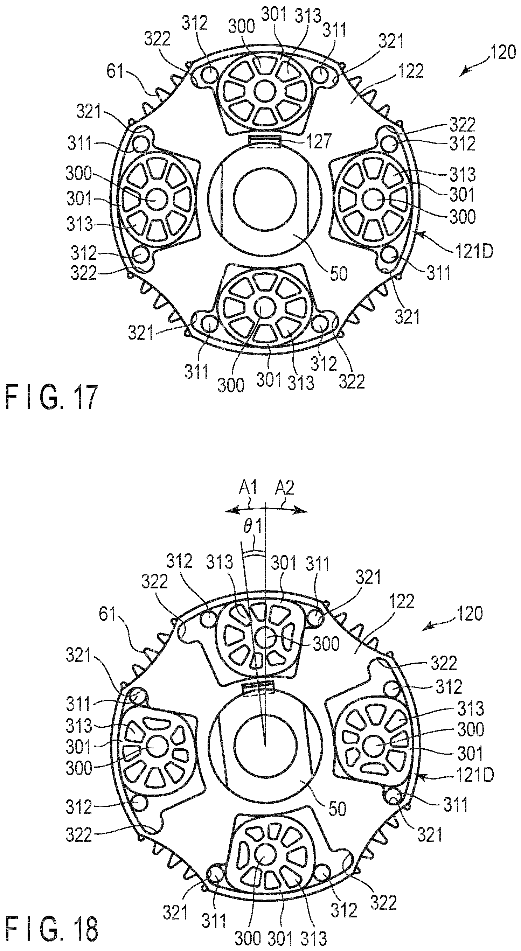

FIG. 17 is a front view showing a force transmission mechanism 120 comprising a damper unit 121D of a fifth embodiment. FIG. 18 shows a state where a driving side rotor 122 of the damper unit 121D rotates in a first direction A1. This damper unit 121D includes a plurality of (for example, four) pins 300, a wheel-shaped elastic member 301, a first stopper 311, and a second stopper 312. The pin 300 is provided on an output gear 61. The elastic member 301 is supported by the pin 300. The first stopper 311 is provided on the output gear 61. The first stopper 311 is opposed to one side of an elastic member 301. The second stopper 312 is provided on the output gear 61. The second stopper 312 is opposed to the other side of the elastic member 301. A plurality of holes 313 are formed around the pin 300 of the elastic member 301.

The driving side rotor 122 includes a first suppression wall 321 and a second suppression wall 322. The first suppression wall 321 is formed on a position corresponding to the first stopper 311. The second suppression wall 322 is formed on a position corresponding to the second stopper 312. The constituent elements other than the above are common to the damper unit 121 of the first embodiment (FIG. 9 to FIG. 11) and the damper unit 121D of the fifth embodiment. Common reference numbers are added to constituent elements which are common to those of the damper unit 121 of the first embodiment and the damper unit 121D of the fifth embodiment and explanations of those parts will be omitted.

As shown in FIG. 18, when the driving side rotor 122 rotates in a first direction A1, the elastic member 301 is compressed between the pin 300 and the driving side rotor 122 to deform. The first stopper 311 contacts the first suppression wall 321 in a state where the elastic member 301 is compressed. Thus, the driving side rotor 122 is prevented from relatively rotating at a first angle θ1 or more with respect to the output gear 61 in the first direction A1. Thus, excessive compression of the first elastic member 301 can be suppressed. Therefore, the first elastic member 301 can be prevented from being broken, and the durability of the elastic member 301 can be increased.

Contrary to the case shown in FIG. 18, when the driving side rotor 122 rotates in the second direction A2, the elastic member 301 is pressed between the driving side rotor 122 and the pin 300 to deform. The second stopper 312 contacts the second suppression wall 322 in a state where the elastic member 301 is compressed. Thus, the driving side rotor 122 is prevented from relatively rotating at a second angle or more with respect to the output gear 61 in a second direction A2. Thus, excessive compression of the elastic member 301 can be suppressed. Therefore, the elastic member 301 can be prevented from being broken, and the durability of the elastic member 301 can be increased.

In all of the plurality of damper units 121, and 121A to 121D according to the embodiments, pins are provided on the output gear 61 and an elastic member is provided on the driving side rotor 122. Further, as another embodiment, a pin may be provided on the driving side rotor 122 and an elastic member may be provided on the output gear 61.

### Industrial Applicability

Needless to say, when carrying out the present invention, each of the elements constituting the engine control apparatus may be modified variously. The engine control apparatus of the present invention may be provided on structures other than the tiller handle of the outboard motor (for example, a hull, a cabin, and the like). The present invention may also be applied to an engine control apparatus for remotely operating machines other than the outboard motor.

### Reference Signs List

10 ... boat, 11 ... hull, 12 ... outboard motor, 20 ... tiller handle, 24 ... shift mechanism, 27 ... lever member, 30 ... engine control apparatus, 40 ... base member, 50 ... input shaft, 51 ... potentiometer, 61 ... output gear, 70 ... motor, 80 ... shift arm shaft, 85 ... shift arm, 86 ... shift cable, 90 ... detent mechanism, 100 ... shift arm driving gear, 110 ... reduction gear mechanism, 120 ... force transmission mechanism, 121 ... damper unit, 122 ... driving side rotor, 123 ... pin, 124 ... first elastic body, 125 ... second elastic body, 128 ... elastic member, 130 ... dumper accommodation hole, 121A ... damper unit, 151, 152 ... spring, 121B ... damper unit, 201 ... first stopper, 202 ... second stopper, 121C ... damper unit, 210 ... elastic member, 211 ... first plate spring, 212 ... second plate spring, 213 ... first stopper, 214 ... second stopper, 221 ... pin, 121D ... damper unit, 300 ... pin, 301 ... elastic member, 311 ... first stopper, 312 ... second stopper, 321 ... first suppression wall, 322 ... second suppression wall.

## Claims

1. An engine control apparatus, comprising:
a base member (40);
a lever member (27) rotating about an input shaft (50) provided on the base member (40), the lever member (27) moving from a neutral position in a first direction and a second direction;
an output gear (61) provided on the input shaft (50), the output gear (61) being capable of relatively rotating about the input shaft (50);
a motor (70) arranged on the base member (40), the motor (70) rotating in a first rotational direction and a second rotational direction;
a potentiometer (51) outputting a signal causing the motor (70) to rotate in the first rotational direction in a state where the lever member (27) moves in the first direction, the potentiometer (51) outputting a signal causing the motor (70) to rotate in the second rotational direction in a state where the lever member (27) moves in the second direction;
a shift arm (85) rotating about a shift arm shaft (80) provided on the base member (40), a shift cable (86) being connected to the shift arm (85);
a shift arm driving gear (100) provided on the shift arm shaft (80), the shift arm driving gear (100) engaging with the output gear (61);
a reduction gear mechanism (110) transmitting rotation of the motor (70) to the shift arm driving gear (100); and **characterised by**
a force transmission mechanism (120) including a damper unit (121) (121A) (121B) (121C) (121D) provided between the input shaft (50) and the output gear (61), the force transmission mechanism (120) allowing the input shaft (50) to rotate in a state where the output gear (61) stops by the damper unit (121) (121A) (121B) (121C) (121D) deforming, when the lever member (27) is located within a predetermined angle from the neutral position, and transmitting the rotation of the input shaft (50) to the output gear (61) via the damper unit (121) (121A) (121B) (121C) (121D), when the lever member (27) has an angle more than the predetermined angle.

2. The engine control apparatus of claim 1,
wherein
the damper unit (121) (121A) (121B) (121C) (121D) includes:
a driving side rotor (122) rotating together with the input shaft (50);
a pin (123) (221) (300) provided on the output gear (61) or the driving side rotor (122); and
an elastic member (128) (210) (301) being pressed by the pin (123) (221) (300) to deform in a state where the input shaft (50) rotates in a first direction and being pressed by the pin (123) (221) (300) to deform in a state where the input shaft (50) rotates in a second direction.

3. The engine control apparatus of claim 2,
wherein
the damper unit (121) (121A) (121B) (121C) (121D) includes:
a first stopper (201) (213) (311) preventing the driving side rotor (122) from relatively rotating at a first angle or more with respect to the output gear (61) in a state where the driving side rotor (122) rotates in the first direction and the elastic member (128) (210) (301) deforms; and
a second stopper (202) (214) (312) preventing the driving side rotor (122) from relatively rotating at a second angle or more with respect to the output gear (61) in a state where the driving side rotor (122) rotates in the second direction and the elastic member (128) (210) (301) deforms.

4. The engine control apparatus of claim 2,
wherein
the elastic member (128) includes:
a first elastic body (124) arranged to be opposed to a side surface of the pin (123), first elastic body (124) being compressed by the pin (123) in a state where the input shaft (50) rotates in the first direction; and
a second elastic body (125) arranged to be opposed to another side surface of the pin (123), the second elastic body (125) being compressed by the pin (123) in a state where the input shaft (50) rotates in the second direction.

5. The engine control apparatus of claim 1,
wherein
the reduction gear mechanism (110) is constituted by a plurality of spur gears, and
in a state where the motor (70) is in non-energized state, when torque input to the input shaft (50) from the lever member (27) is transmitted to the output gear (61) and the shift arm driving gear (100) via the force transmission mechanism (120), the shift arm (85) is rotated by the torque and the motor (70) is driven to rotate by the torque transmitted to the motor (70) via the reduction gear mechanism (110).

6. The engine control apparatus of claim 1,
wherein
the engine control apparatus is provided on a tiller handle (20) of an outboard motor, and
the shift cable (86) is connected to a shift mechanism (24) of the outboard motor.

## Patentansprüche

1. Motorsteuerungseinrichtung, umfassend:
ein Basiselement (40);
ein Hebelelement (27), das sich um eine Eingabewelle (50) herum dreht, die auf dem Basiselement (40) bereitgestellt ist, wobei sich das Hebelelement (27) aus einer neutralen Position in eine erste Richtung und eine zweite Richtung bewegt;
ein Ausgabezahnrad (61), das auf der Eingabewelle (50) bereitgestellt ist, wobei das Ausgabezahnrad (61) dazu fähig ist, sich relativ um die Eingabewelle (50) herum zu drehen;
einen Motor (70), der auf dem Basiselement (40) angeordnet ist, wobei sich der Motor (70) in eine erste Drehrichtung und eine zweite Drehrichtung dreht;
ein Potentiometer (51), das ein Signal ausgibt, das den Motor (70) in einem Zustand, in dem sich das Hebelelement (27) in die erste Richtung bewegt, dazu veranlasst, sich in die erste Drehrichtung zu drehen, wobei das Potentiometer (51) ein Signal ausgibt, das den Motor (70) in einem Zustand, in dem sich das Hebelelement (27) in die zweite Richtung bewegt, dazu veranlasst, sich in die zweite Drehrichtung zu drehen;
einen Schaltarm (85), der sich um eine Schaltarmwelle (80) herum dreht, die auf dem Basiselement (40) bereitgestellt ist, wobei ein Schaltkabel (86) mit dem Schaltarm (85) verbunden ist;
ein Schaltarmantriebszahnrad (100), das auf der Schaltarmwelle (80) bereitgestellt ist, wobei das Schaltarmantriebszahnrad (100) mit dem Ausgabezahnrad (61) in Eingriff steht;
einen Untersetzungszahnradmechanismus (110), der eine Drehung des Motors (70) auf das Schaltarmantriebszahnrad (100) überträgt; und **gekennzeichnet durch**
einen Kraftübertragungsmechanismus (120), der eine Dämpfereinheit (121) (121A) (121B) (121C) (121D) beinhaltet, die zwischen der Eingabewelle (50) und dem Ausgabezahnrad (61) bereitgestellt ist, wobei der Kraftübertragungsmechanismus (120) in einem Zustand, in dem das Ausgabezahnrad (61) dadurch anhält, dass sich die Dämpfereinheit (121) (121A) (121B) (121C) (121D) verformt, es der Eingabewelle (50) ermöglicht, sich zu drehen, wenn sich das Hebelelement (27) innerhalb eines vorbestimmten Winkels von der neutralen Position befindet, und die Drehung der Eingabewelle (50) über die Dämpfereinheit (121) (121A) (121B) (121C) (121D) auf das Ausgabezahnrad (61) überträgt, wenn das Hebelelement (27) einen größeren Winkel als den vorbestimmten Winkel aufweist.

2. Motorsteuerungseinrichtung nach Anspruch 1, wobei
die Dämpfereinheit (121) (121A) (121B) (121C) (121D) Folgendes beinhaltet:
einen antriebsseitigen Rotor (122), der sich zusammen mit der Eingabewelle (50) dreht;
einen Stift (123) (221) (300), der auf dem Ausgabezahnrad (61) oder dem antriebsseitigen Rotor (122) bereitgestellt ist; und
ein elastisches Element (128) (210) (301), das in einem Zustand, in dem sich die Eingabewelle (50) in eine erste Richtung dreht, durch den Stift (123) (221) (300) gedrückt wird, um sich zu verformen, und in einem Zustand, in dem sich die Eingabewelle (50) in eine zweite Richtung dreht, durch den Stift (123) (221) (300) gedrückt wird, um sich zu verformen.

3. Motorsteuerungseinrichtung nach Anspruch 2, wobei
die Dämpfereinheit (121) (121A) (121B) (121C) (121D) Folgendes beinhaltet:
einen ersten Anschlag (201) (213) (311), der den antriebsseitigen Rotor (122) in einem Zustand, in dem sich der antriebsseitige Rotor (122) in die erste Richtung dreht und sich das elastische Element (128) (210) (301) verformt, daran hindert, sich in Bezug auf das Ausgabezahnrad (61) in einem ersten Winkel oder größer relativ zu drehen; und
einen zweiten Anschlag (202) (214) (312), der den antriebsseitigen Rotor (122) in einem Zustand, in dem sich der antriebsseitige Rotor (122) in die zweite Richtung dreht und sich das elastische Element (128) (210) (301) verformt, daran hindert, sich in Bezug auf das Ausgabezahnrad (61) in einem zweiten Winkel oder größer relativ zu drehen.

4. Motorsteuerungseinrichtung nach Anspruch 2, wobei
das elastische Element (128) Folgendes beinhaltet:
einen ersten elastischen Körper (124), der dazu angeordnet ist, einer Seitenfläche des Stiftes (123) gegenüberzuliegen, wobei der erste elastische Körper (124) in einem Zustand, in dem sich die Eingabewelle (50) in die erste Richtung dreht, durch den Stift (123) zusammengedrückt wird; und
einen zweiten elastischen Körper (125), der dazu angeordnet ist, einer anderen Seitenfläche des Stiftes (123) gegenüberzuliegen, wobei der zweite elastische Körper (125) in einem Zustand, in dem sich die Eingabewelle (50) in die zweite Richtung dreht, durch den Stift (123) zusammengedrückt wird.

5. Motorsteuerungseinrichtung nach Anspruch 1, wobei
der Untersetzungszahnradmechanismus (110) aus einer Vielzahl von Stirnzahnrädern besteht und
in einem Zustand, in dem sich der Motor (70) in einem nicht energetisierten Zustand befindet, wenn ein Drehmoment, das in die Eingabewelle (50) aus dem Hebelelement (27) eingegeben wird, über den Kraftübertragungsmechanismus (120) auf das Ausgabezahnrad (61) und das Schaltarmantriebszahnrad (100) übertragen wird, der Schaltarm (85) durch das Drehmoment gedreht wird und der Motor (70) durch das Drehmoment, das über den Untersetzungszahnradmechanismus (110) auf den Motor (70) übertragen wird, dazu angetrieben wird, sich zu drehen.

6. Motorsteuerungseinrichtung nach Anspruch 1, wobei
die Motorsteuerungseinrichtung auf einem Pinnengriff (20) eines Außenbordmotors bereitgestellt ist und
das Schaltkabel (86) mit einem Schaltmechanismus (24) des Außenbordmotors verbunden ist.

## Revendications

1. Appareil de commande de moteur comprenant :
un élément de base (40) ;
un élément de levier (27) tournant autour d'un arbre d'entrée (50) prévu sur l'élément de base (40), l'élément de levier (27) se déplaçant à partir d'une position neutre dans une première direction et une deuxième direction ;
un engrenage de sortie (61) prévu sur l'arbre d'entrée (50), l'engrenage de sortie (61) pouvant tourner relativement autour de l'arbre d'entrée (50) ;
un moteur (70) agencé sur l'élément de base (40), le moteur (70) tournant dans une première direction de rotation et une deuxième direction de rotation ;
un potentiomètre (51) délivrant un signal amenant le moteur (70) à tourner dans la première direction de rotation, dans un état dans lequel l'élément de levier (27) se déplace dans la première direction, le potentiomètre (51) délivrant un signal amenant le moteur (70) à tourner dans la deuxième direction de rotation, dans un état dans lequel l'élément de levier (27) se déplace dans la deuxième direction ;
un bras de changement de vitesse (85) tournant autour d'un arbre de bras de changement de vitesse (80) prévu sur l'élément de base (40), un câble de changement de vitesse (86) étant raccordé au bras de changement de vitesse (85) ;
un engrenage d'entraînement de bras de changement de vitesse (100) prévu sur l'arbre de bras de changement de vitesse (80), l'engrenage d'entraînement de bras de changement de vitesse (100) se mettant en prise avec l'engrenage de sortie (61) ;
un mécanisme de réduction (110) transmettant la rotation du moteur (70) à l'engrenage d'entraînement de bras de changement de vitesse (100) ; et **caractérisé par** :
un mécanisme de transmission de force (120) comprenant une unité d'amortissement (121) (121A) (121B) (121C) (121D) prévue entre l'arbre d'entrée (50) et l'engrenage de sortie (61), le mécanisme de transmission de force (120) permettant à l'arbre d'entrée (50) de tourner dans un état dans lequel l'engrenage de sortie (61) s'arrête par la déformation de l'unité d'amortissement (121) (121A) (121B) (121C) (121D), lorsque l'élément de levier (27) est situé dans un angle prédéterminé par rapport à la position neutre, et transmettant la rotation de l'arbre d'entrée (50) à l'engrenage de sortie (61) via l'unité d'amortissement (121) (121A) (121B) (121C) (121D), lorsque l'élément de levier (27) a un angle supérieur à l'angle prédéterminé.

2. Appareil de commande de moteur selon la revendication 1, dans lequel :
l'unité d'amortissement (121) (121A) (121B) (121C) (121D) comprend :
un rotor du côté de l'entraînement (122) tournant conjointement avec l'arbre d'entrée (50) ;
une broche (123) (221) (300) prévue sur l'engrenage de sortie (61) ou le rotor du côté de l'entraînement (122) ; et
un élément élastique (128) (210) (301) qui est comprimé par la broche (123) (221) (300) pour se déformer dans un état dans lequel l'arbre d'entrée (50) tourne dans une première direction et qui est comprimé par la broche (123) (221) (300) pour se déformer dans un état dans lequel l'arbre d'entrée (50) tourne dans une deuxième direction.

3. Appareil de commande de moteur selon la revendication 2, dans lequel :
l'unité d'amortissement (121) (121A) (121B) (121C) (121D) comprend :
une première butée (201) (213) (311) empêchant le rotor du côté de l'entraînement (122) de tourner relativement à un premier angle ou plus par rapport à l'engrenage de sortie (61) dans un état dans lequel le rotor du côté de l'entraînement (122) tourne dans la première direction et l'élément élastique (128) (210) (301) se déforme ; et
une deuxième butée (202) (214) (312) empêchant le rotor du côté de l'entraînement (122) de tourner relativement à un deuxième angle ou plus par rapport à l'engrenage de sortie (61) dans un état dans lequel le rotor du côté de l'entraînement (122) tourne dans la deuxième direction et l'élément élastique (128) (210) (301) se déforme.

4. Appareil de commande de moteur selon la revendication 2, dans lequel :
l'élément élastique (128) comprend :
un premier corps élastique (124) agencé pour être opposé à une surface latérale de la broche (123), le premier corps élastique (124) étant comprimé par la broche (123) dans un état dans lequel l'arbre d'entrée (50) tourne dans la première direction ; et
un deuxième corps élastique (125) agencé pour être opposé à une autre surface latérale de la broche (123), le deuxième corps élastique (125) étant comprimé par la broche (123) dans un état dans lequel l'arbre d'entrée (50) tourne dans la deuxième direction.

5. Appareil de commande de moteur selon la revendication 1, dans lequel :
le mécanisme de réduction (110) est constitué par une pluralité d'engrenages droits, et
dans un état dans lequel le moteur (70) est dans un état non alimenté, lorsque le couple entré dans l'arbre d'entrée (50) depuis l'élément de levier (27) est transmis à l'engrenage de sortie (61) et à l'engrenage d'entraînement de bras de changement de vitesse (100) via le mécanisme de transmission de force (120), le bras de changement de vitesse (85) est entraîné en rotation par le couple et le moteur (70) est entraîné pour tourner grâce au couple transmis au moteur (70) via le mécanisme de réduction (110).

6. Appareil de commande de moteur selon la revendication 1, dans lequel :
l'appareil de commande de moteur est prévu sur une poignée de barre franche (20) d'un moteur hors-bord, et
le câble de changement de vitesse (86) est raccordé à un mécanisme de changement de vitesse (24) du moteur hors-bord.
